# EUROPÄISCHE PATENTANMELDUNG

(11) **EP 4 796 300 A1**
(43) Veröffentlichungstag der Anmeldung: **26.08.2026**
(21) Anmeldenummer: 26151478.0
(22) Anmeldetag: 13.01.2026
(51) Int. Cl.: B29C 65/18, B29C 51/10, B29C 51/30, B29C 65/00, B29C 65/24, B29C 65/78

(54) **VERFAHREN UND VORRICHTUNG ZUR HERSTELLUNG EINES VERBUNDBAUTEILS**

(30) Priorität: 28.01.2025 DE 102025103019
(71) Anmelder: Karlsruher Institut für Technologie, Körperschaft des öffentlichen Rechts, 76131 Karlsruhe (DE)
(72) Erfinder: Gottwald, Prof. Dr. Eric, 76149 Karlsruhe (DE); Grün, Christoph, 76877 Offenbach (DE)

(57) **Zusammenfassung**

Herstellverfahren eines Verbundbauteils **(1)** umfassend eine Bereitstellung einer thermoplastischen Trägerplatte **(2)** mit Durchtrittsöffnungen **(3)** mit Austritten **(4)** und einer Auflagefläche **(5),** einer thermoplastischen Folie **(6),** wobei sich deren Temperaturintervalle des plastischen Bereichs überschneiden, einer Formmaske **(7)** mit Durchbrüchen **(8),** einer Druckquelle oder Drucksenke mit einem Druckverteiler **(9)** mit Anschlüssen **(10)** zu allen Durchbrüchen sowie einer Temperierungsvorrichtung **(11).** Es folgen ein Aneinanderpressen der Folie auf die Auflagefläche und der Formmaske auf die Folie, ein Aufheizen zumindest der Formmaske **(7)** auf eine Temperatur in den überschneidenden Temperaturintervallen, wobei sich Folie und Trägerplatte dauerhaft miteinander zu dem Verbundbauteil **(1)** verbinden, ein Anlegen eines Über- oder Unterdrucks an den Anschlüssen **(10)** unter Beibehaltung der Temperatur, wobei die Folie an den Durchbrüchen der Formmaske unter Ausbildung jeweils einer Mikrostruktur plastisch verformt wird, ein Absenken der Temperatur von Folie **(6)** und Trägerplatte **(2)** unter die Glasübergangstemperaturen sowie Trennen des Verbundbauteils **(1)** von der Formmaske **(7).**

## Beschreibung

Die Erfindung betrifft ein Verfahren und eine Vorrichtung zur Herstellung eines Verbundbauteils aus thermoplastischen Kunststoffen nach Anspruch 1 bzw. 9.

Eingangs genannte Verbundbauteile setzen sich aus zumindest zwei Komponenten aus thermoplastischen Kunststoffen zusammen. Sie sind dauerhaft stoffschlüssig miteinander verbunden. Für die stoffschlüssige Verbindung bieten sich Verklebungen (Lösungsmittelhaltig oder adhäsiv wirkend) mit zusätzlichen Klebstoffen oder durch flüchtige Lösungsmittel oder thermisch realisierbare Schweißverbindungen der Komponenten untereinander an. Derartige Verbundbauteile kann als in der Technik allgemein verbreitet und geläufig angenommen werden, ohne dass es eines explizit anzugebenden Zitates bedarf.

Eine Schweißverbindung für das genannte Verbundbauteil aus zumindest zwei Komponenten ist durch eine thermische Einwirkung der miteinander zu verbindenden Komponenten aus thermoplastischen Kunststoffen realisierbar, deren Temperaturintervalle des plastischen Bereichs sich überschneiden. Die zu verbindenden Komponenten berühren sich dabei. Durch ein Aufheizen zumindest einer der zu verbindenden Komponenten auf eine Temperatur, die in den Temperaturintervallen des plastischen Bereichs liegt, kommt es zu der dauerhaften stoffschlüssigen Verbindung zwischen der sich berührenden Komponenten. Auch dies ist allgemein bekannt.

Eine konkrete Anwendung für solche Verbundbauteile sowie deren Herstellungsverfahren bieten 3D-Zellkulturplattformen für die Grundlagen- aber auch angewandte Forschung im Bereich der Biotechnologie. In einschlägigen Forschungsprojekten zeigt sich immer wieder, dass die Übertragbarkeit der Ergebnisse auf die Humansituation mit in diesen Plattformen dreidimensional kultivierten humanen Zellen nicht nur gegeben ist, sondern auch denen aus entsprechenden Tierversuchen überlegen sind. So ist bekannt, dass die Rattenleber viele Enzyme gar nicht besitzt, die für die humane Leber als wichtigste Enzyme für die Verstoffwechselung bestimmter Stoffklassen sind. Dies wird flankiert durch EU-Vorgaben, die Tierversuche schon jetzt insbesondere für die Fälle verbieten, in denen Alternativen etabliert sind.

Die gebräuchlichste Ausführungsform einer 3D-Zellkulturplattform ist die 96-Well-Mikrotiterplatte, die insbesondere für Reihenuntersuchungen, darunter für Absorptions-, Fluoreszenz-, Lumineszenz- und andere Messverfahren herangezogen wird. Varianten für die Züchtung organotypischer Zellkulturen erfordern zudem gewölbte oder mikrostrukturierte und ggfs. fluiddurchlässige Böden, mit denen die Zellkulturen einerseits in den Wells gehalten werden, andererseits auch über die diese Zellkulturen überhaupt mittels Nährstofflösungen nutrifizierbar sind. Eine Herstellung dieser Bauform, insbesondere der Böden, ist bei Verwendung herkömmlicher Verfahren wie Laser- und Ultraschweißen oder Klebeverfahren aufwendig und teuer. Zudem scheiden bei biologischen oder medizinischen Fragestellungen Klebstoff-basierte Verfahren aus, da sie in der Regel nicht biokompatibel sind.

Ein weiterer Ansatz für eine Fertigung von 3D-Zellkulturplattformen sieht vor, eine Platte mit durchgängigen Bohrungen einseitig mit einer durchlässigen mikrostrukturierten Folie, Membran oder Gitterstruktur zu verbinden. Gängige Verfahren für eine derartige Verbindung sind das Laserschweißen, das Ultraschallschweißen oder Klebeverfahren mit Hilfe von Vermittlerschichten. Allen ist gemeinsam, dass zunächst die Platte und die Folie, Membran oder Gitterstruktur separat gefertigt und erst anschließend mit der anderen verbunden wird. Darüber hinaus bestehen hohe Anforderungen an die Positioniergenauigkeit der zu fügenden Teile, was einen zusätzlichen Aufwand für die Herstellung bedeutet.

Davon ausgehend liegt eine **Aufgabe** der Erfindung darin, ein Verfahren und eine Vorrichtung zur Herstellung eines Verbundbauteils vorzuschlagen, die nicht nur eine dauerhafte Schweißverbindung von zumindest zwei thermoplastischen Komponenten ermöglicht, sondern zusätzlich in zumindest eine Komponente zugleich eine Mikrostruktur erzeugt und zugleich gegenüber herkömmlichen Verfahren fehlertoleranter ist.

Eine weitere Aufgabe der Erfindung liegt darin, ein Verfahren und eine Vorrichtung zur Herstellung einer 3D-Zellkulturplattform als Verbundbauteil vorzuschlagen.

Die Aufgabe wird durch ein Verfahren und eine Vorrichtung mit den Merkmalen des ersten beziehungsweise neunten Patentanspruchs gelöst. Hierauf rückbezogene Unteransprüche geben vorteilhafte Ausführungsformen wieder.

Die Aufgabe wird durch ein **Verfahren** zur Herstellung eines Verbundbauteils gelöst, umfassend folgende Verfahrensschritte, vorzugsweise in der dargestellten Chronologie:
- Bereitstellung einer Trägerplatte mit mindestens einer Durchtrittsöffnung, vorzugsweise eine Mikrotiterplatte mit einer Anzahl von Wells als Durchtrittsöffnungen, vorzugsweise 96 Wells, jeweils mit beidseitigen Austritten und einer Auflagefläche um die Austritte auf einer Seite, sowie einer Folie, wobei die Trägerplatte und die Folie jeweils aus einem thermoplastischen Kunststoff bestehen, deren Temperaturintervalle des plastischen Bereichs sich überschneiden.
- Bereitstellung einer Formmaske mit Durchbrüchen, einer Druckquelle oder Drucksenke mit einem Druckverteiler mit Anschlüssen zu allen Durchbrüchen der Formmaske sowie einer Temperierungsvorrichtung für zumindest die Formmaske.
- Auflegen und flächiges Aneinanderpressen der Folie auf die Auflagefläche und der Formmaske auf die Folie, wobei die Durchbrüche der Formmaske über der mindestens einen Durchtrittsöffnung angeordnet sind. Vorzugsweise werden dabei Mittel vorgeschlagen, die geeignet sind, die Folie auf die Auflagefläche der Trägerplatte und der Formmaske auf die Folie als Komponentenstapel als Ganzes flächig aneinander zu pressen. Flächig heißt hier, dass die Mittel nicht punktuell auf die genannten Komponenten wirken, sondern die Pressung beispielsweise mittels flächig einwirkender Stempel oder andere Zwischenelemente flächig auf die Trägerplatte und/oder die die Formmaske realisiert wird. Damit wird in vorteilhafter Weise eine konstante Pressung über die gesamte Erstreckung der zwischen der Trägerplatte und der Formmaske positionierten Folie realisiert. Die genannten Mittel umfassen hierfür bevorzugt mechanische, pneumatische und/oder hydraulische Mittel.
- Aufheizen zumindest der Formmaske auf eine Temperatur, die in den Temperaturintervallen des plastischen Bereichs der Folie und der Trägerplatte liegt, wobei sich Folie und Trägerplatte dauerhaft miteinander zu dem Verbundbauteil verbinden. Vorzugsweise bestehen dabei die Trägerplatte und die Folie aus dem gleichen thermoplastischen Kunststoff oder sie bestehen aus Kunststoffen, deren Glasübergangstemperaturen in ihren Grenzen um maximal 20, bevorzugt 5°C voneinander abweichen. Diese thermoplastischen Kunststoffe sind wiederum weiter bevorzugt ein Polystyrol, das selbst kostengünstig im Materialwert auch ebenso einfach thermisch verarbeitbar ist.
- Anlegen eines Über- oder Unterdrucks an den Anschlüssen der Formmaske unter Beibehaltung der Temperatur, wobei die Folie lokal an den Durchbrüchen der Formmaske unter Ausbildung jeweils einer dreidimensionalen Mikrostruktur plastisch in diese heraus- bzw. hineingezogen wird.
- Abkühlen der Formmaske und das damit verbundene Absenken der Temperatur von Folie und Trägerplatte unter die Glasübergangstemperaturen. Vorzugsweise findet dieses Abkühlen im Bereich oberhalb und um die Glasübergangstemperaturen mit einer geringeren Abkühlungsrate als unterhalb den Glasübergangstemperaturen. Umformung und thermisches Verbinden gehen nämlich mit erhöhten Materialumlagerungen statt, und zwar überwiegend oberhalb der Glasübergangstemperaturen. Geringere Abkühlraten ermöglichen größere Zeitintervalle, was wiederum einem vollständigem Abschuss dieser Umlagerungen sicherstellt.
- Trennen des Verbundbauteils von der Formmaske.

Im Rahmen eines bevorzugten Verfahrens wird vorgeschlagen eine Formkulisse bereitzustellen, in die die Formmaske, die Folie und die Trägerplatte in der Reihenfolge übereinander eingelegt und zumindest die Trägerplatte, die Folie und die Formmaske zueinander ausgerichtet werden. Besonders wichtig ist die Ausrichtung der Trägerplatte und der Formmaske zueinander, da die Ausrichtung der Durchtrittsöffnungen der Trägerplatte und die Durchbrüche der Formmaske übereinander angeordnet sein müssen, und zwar bevorzugt deckungsgleich. Hierzu werden im Rahmen einer bevorzugten Ausgestaltung Führungsmittel zumindest der genannten Trägerplatte und der Formmaske in der Vorrichtung zur Herstellung des Verbundbauteils vorgeschlagen. Ist die Folie vor dem Einlegen bevorzugt unstrukturiert, ist eine exakte Ausrichtung dieser zwischen der Formmaske und der Trägerplatte nicht erforderlich. Wichtig ist jedoch, dass sich die Folie zumindest über alle Durchtrittsöffnungen der Trägerplatte erstreckt, vorzugsweise auch über die laterale Erstreckung der Trägerplatte.

Die Formkulisse umfasst insbesondere bei Verwendung der vorgenannten Formkulisse vorzugsweise den Druckverteiler mit den Anschlüssen zu allen Durchbrüchen der Formmaske.

Eine Ausgestaltung sieht eine Formkulisse als Teil eines Gehäuses mit einem Innenvolumen vor, in das die Formmaske, die Folie und die Trägerplatte eingelegt werden. Das Innenvolumen entsteht mit einer Abdeckung der bevorzugt wannenförmigen Formkulisse mit einem Deckel, wobei das Innenvolumen zwischen Deckel und Formkulisse nach außen hin abgedichtet ist, vorzugsweise durch eine umlaufende Dichtfläche und/oder einem zusätzlichen Dichtelement.

Ist in das vorgenannte Innenvolumen die Formmaske, die Folie und die Trägerplatte in der Reihenfolge übereinander als Komponentenstapel eingelegt, wird vorgeschlagen, zwischen der Innenwandung des Innenvolumens und der Formmaske oder der Trägerplatte eine erste umlaufende Dichtung einzusetzen, wodurch das Innenvolumen um den Komponentenstapel in zwei Teilvolumina, einem ersten und einem zweiten Teilvolumen unterteilt wird. Dabei ist für das erste Teilvolumen eine fluidische Verbindung mit dem Druckverteiler und für das zweite Teilvolumen eine fluidische Verbindung mit den abseits der Folie angeordneten Austritten der Durchtrittsöffnungen in der Trägerplatte vorgesehen. Durch die vorgeschlagene Ausgestaltung sind die beiden Teilvolumina mit unterschiedlichen Drücken fluidisch beaufschlagbar, was bei entsprechender Aufwärmung zumindest der Formmaske auf eine Temperatur, die in den Temperaturintervallen der plastischen Bereiche der Folie und der Trägerplatte liegen, nicht nur ein Aneinanderpressen der Formmaske, der Folie und der Trägerplatte aneinander, sondern zugleich auch zu einer Verschweißung oder einer anderen stofflichen Verbindung zumindest der Folie mit der Trägerplatte bewirkt.

Die Aufgabe wird aber auch durch eine **Vorrichtung** zur Herstellung eines Verbundbauteils aus einer Trägerplatte mit Durchtrittsöffnungen und einer die Durchtrittsöffnung einseitig abdeckenden Folie mit einer Mikrostruktur gelöst. Die Vorrichtung umfasst die nachfolgend genannten Komponenten:
- Eine Formmaske mit Durchbrüchen mit einer Auflage für die Folie.
- Eine erste Druckquelle oder Drucksenke.
- Ein Druckverteiler als fluidische Verbindung zwischen der Druckquelle oder Drucksenke und allen Durchbrüchen der Formmaske.
- Eine Temperierungsvorrichtung für zumindest die Formmaske.
- Mittel zum flächigen Aneinanderpressen der Folie auf die Auflagefläche und der Formmaske auf die Folie und die Folie auf die Trägerplatte. Da eine Ausrichtung der Formmaske und der Trägerplatte wie zuvor beschrieben gewähreistet werden muss, wird im Rahmen einer bevorzugten Ausgestaltung Führungsmittel zumindest der Trägerplatte und Formmaske zueinander vorgesehen.

Eine bevorzugte Ausführungsform der Vorrichtung sieht eine Formkulisse mit einer Aussparung zum Einlegen der Formmaske, der Folie und der Trägerplatte in der Reihenfolge übereinander vor, die vorzugsweise auch die Funktion der vorgenannten Führungsmittel zumindest der Trägerplatte und Formmaske zueinander einnimmt und dementsprechend auch umfasst.

Ferner wird im Rahmen einer bevorzugten Ausführungsform vorgeschlagen, die vorgenannte Formkulisse mit einem Deckel abzudecken. Formkulisse und Deckel bilden so ein Gehäuse mit einem Innenvolumen zur Aufnahme von Formmaske, Folie und Trägerplatte. Weiter bevorzugt umfasst die Vorrichtung dabei eine umlaufende Dichtung im Innenvolumen auf der Höhe der darin einlegbaren Formmaske oder der Trägerplatte, womit das Innenvolumen um das Verbundbauteil in ein erstes und zweites Teilvolumen unterteilt ist. Weiterhin sind zumindest eine fluidische Verbindung zwischen dem zweiten Teilvolumen und allen Durchtrittsöffnungen in der Trägerplatte sowie einem Anschluss des zweiten Teilvolumens an eine zweite Druckquelle oder Drucksenke vorgesehen, vorzugsweise als einzige Öffnungen vom Innenvolumen aus dem Gehäuse.

Eine bevorzugte Ausgestaltung des vorgenannten Gehäuses der Vorrichtung sieht Mittel zum flächigen Aneinanderpressen der Folie auf die Auflagefläche und der Formmaske auf die Folie und die Folie auf die Trägerplatte umfassend ein hydraulisches oder pneumatisches Kolbenelement vor, das im Innenvolumen über der Trägerplatte angeordnet mittels einer umlaufenden fluiddichten Kolbendichtung zur Innenwandung des Innenvolumens am Deckel oder in der Formkulisse hin ein Kolbenhubvolumen als drittes Teilvolumen mit einem Druckanschluss für eine Druckquelle einschließt.

Vorzugsweise sind in der Vorrichtung beispielsweise durch Führungsmittel sichergestellt, dass die Durchtrittsöffnungen in der Trägerplatte und die Durchbrüche der über oder unter die Trägerplatte angeordneten Formmaske übereinander angeordnet und deckungsgleich sind. Vorzugsweise wird dabei vorgeschlagen, die Durchbrüche der Formmaske anzufasen, d.h. mit einer Fase, vorzugsweise als kantenlose Rundung, an der Auflage zur Folie hin zu versehen. Die Fase dient zur Formgebung der randnahen Folienbereiche einer durch Unterdruck in den Durchbruch der Formmaske eingezogenen Folie, wobei Knickstellen in vorteilhafter Weise vermeidbar werden.

Eine weitere vorteilhafte Ausgestaltung sieht eine bodenlose Mikrotiterplatte mit einer Vielzahl gleichartiger und parallel zueinander angeordneten Durchtrittsöffnungen als Trägerplatte vor.

Die Folie weist für eine vorgesehene Verwendung als Zellkulturcontainer eine Stärke bevorzugt von 5 bis 500 µm, weiter bevorzugt von 10 bis 100 µm auf.

Die Lösung der Aufgabe basiert folglich auf der Überlegung, einen unstrukturierten und ungeformten Folien-Rohling in nur einem Verfahrensschritt einseitig über die Wells einer Mikrotiterplatte aufzulegen und fluidisch anzudrücken sowie thermisch anzubinden und mit der erforderlichen Wärme zugleich auch zu mikrothermoformen. Durch die Tatsache, dass eine Folie ohne vorherige Strukturierung thermogeformt wird, entfällt in besonders vorteilhafter Weise die Anforderung an die Positionierung einer geformten Folie und das anschließende separate Bonden auf der Trägerplatte. Darüber hinaus wird die Verwendung von Vermittlerschichten für das Kleben oder Schweißen der Kunststoffe vermieden. Ferner zeichnet sich das vorgeschlagene Verfahren durch eine einfache Anpassbarkeit auf unterschiedliche Folientypen und -stärken oder auch Folienverbunde oder beschichtete Folien aus.

Das Verfahren mit Verwendung der vorgeschlagenen Vorrichtung eignet sich insbesondere zum Mikrothermoformen von Folien, die für eine 3D-Zellkultur in proprietären Mikrobioreaktoren und Organ-on-a-Chip-Systemen verwendet werden (Mikrokavitätenarrays). Dabei konnte gezeigt werden, dass dreidimensional kultivierte Zellen eine deutlich ähnlichere Funktionalität zur in vivo-Situation zeigen als 2D-Kulturen in Petrischalen oder Mulitwellplatten mit planarem Boden. In vitro-Screeningreihen werden in der pharmazeutischen Industrie üblicherweise in planaren Mikrotiterplatten durchgeführt. Ergebnisse mit organotypischen 3D-Kulturen zeigen jedoch gerade hier ein erweitertes Anwendungspotential für das Hochdurchsatz-Screening in der pharmazeutischen Industrie, was einen enormen Bedarf für mikrostrukturierte Zellkulturplatten vorzugsweise im 96-Well-Format oder deren Derivate (384-, 1536-Well) hervorruft. Mit dem vorgeschlagenen Verfahren und der Vorrichtung lassen sich die Zellkulturcontainer aus einer Trägerplatte und einer Folie herstellen, wobei das Verbinden (Bonden) und Mikrothermoformen in einem Herstellungsschritt in vorteilhafter Weise besonders wirtschaftlich erfolgt. Damit lassen sich die bei herkömmlichen Verbundbauteilen üblichen Herstellungskosten für den aufwendigen Bonding-Schritt mittels Laser- oder Ultraschallschweißen oder Kleben einsparen und die Herstellungskosten drastisch senken.

Die Erfindung wird anhand von Ausführungsbeispielen, den folgenden Figuren und Beschreibungen näher erläutert. Alle dargestellten Merkmale und deren Kombinationen sind nicht nur auf diese Ausführungsbeispiele und deren Ausgestaltungen begrenzt. Vielmehr sollen diese stellvertretend für weitere mögliche, aber nicht explizit als Ausführungsbeispiele dargestellte weitere Ausgestaltungen kombinierbar angesehen werden. Es zeigen

**Fig.1** eine schematische Schnittdarstellung eines ersten Ausführungsbeispiels einer Vorrichtung mit einem Komponentenstapel aus Trägerplatte, Folie, Formmaske,

**Fig.2** eine schematische Schnittdarstellung eines zweiten Ausführungsbeispiels einer Vorrichtung mit einem Gehäuse,
**Fig.3** eine schematische Schnittdarstellung eines dritten Ausführungsbeispiels einer Vorrichtung mit einem Gehäuse,

**Fig.4** eine schematische Schnittdarstellung einer Ausgestaltung des ersten Ausführungsbeispiels einer Vorrichtung mit einem Komponentenstapel aus Trägerplatte, Folie, Formmaske, bei dem die Durchbrüche in der Formmaske eine Fase aufweisen, sowie

**Fig.5** eine schematische Schnittdarstellung durch einen Zellkulturträger als Verbundbauteil, hergestellt nach vorgenanntem Herstellungsverfahren.

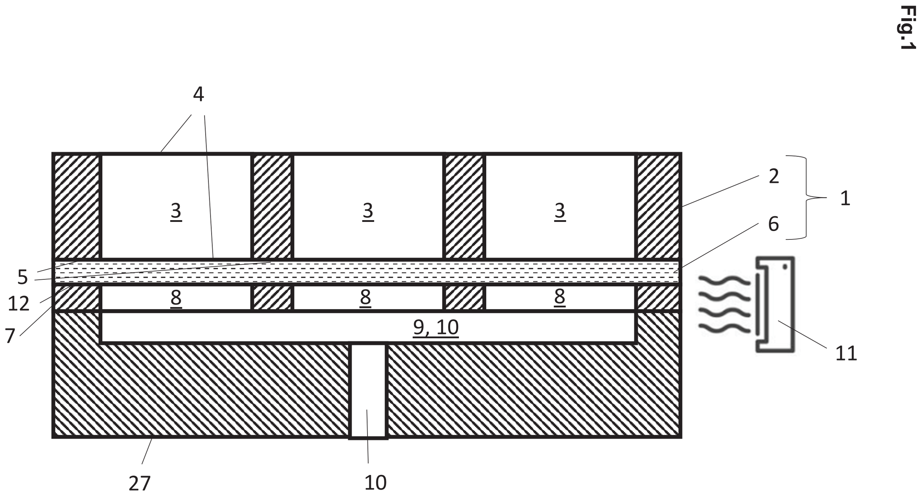

Ein erstes Ausführungsbeispiel für eine Vorrichtung zur Herstellung eines Verbundbauteils **1** zeigt **Fig.1****.** Das durch diese Vorrichtung vorzugsweise mit einem der vorgenannten Verfahren herzustellende Verbundbauteil umfasst dabei eine Trägerplatte **2** mit Durchtrittsöffnungen **3** und einer die Durchtrittsöffnung einseitig abdeckenden Folie **6.** Im Zuge des vorgenannten Verfahrens erfolgt nicht nur eine Verbindung von Folie und Trägerplatte, sondern auch eine Formung oder eine Bildung einer Mikrostruktur **26** im Bereich der Durchtrittsöffnungen.

Das in **Fig.1** dargestellte Ausführungsbeispiel weist eine Formmaske **7** mit Durchbrüchen **8** mit einer Auflage **12** für die Folie **6** und damit für das Verbundbauteil auf. Die Vorrichtung umfasst insbesondere einen Druckverteiler **9** in einem Verteilerblock **27** als Anschluss **10,** d.h. fluidische Verbindung zwischen einer nicht weiter dargestellte Druckquelle oder Drucksenke als Teil der Vorrichtung und allen der vorgenannten Durchbrüche **8** der Formmaske **7** auf. Ferner umfasst die Vorrichtung in **Fig.1** nicht weiter dargestellte Mittel zum flächigen Aneinanderpressen der Folie **6** auf die Auflagefläche **5** und der Formmaske **7** auf die Folie **6** und die Folie auf die Trägerplatte **2.** Das dargestellte Ausführungsbeispiel repräsentiert eine offene Bauweise ohne ein Gehäuse der vorgenannten Art mit Formkulisse und Deckel.

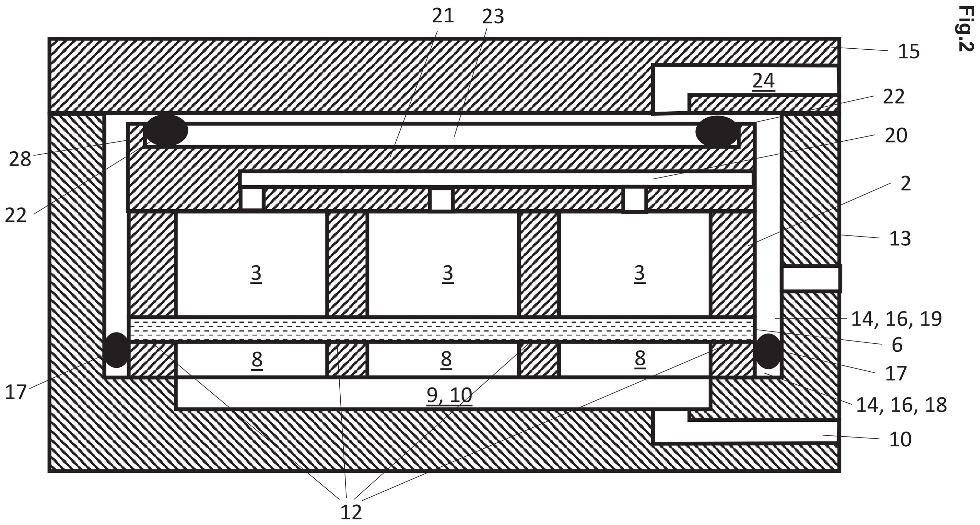

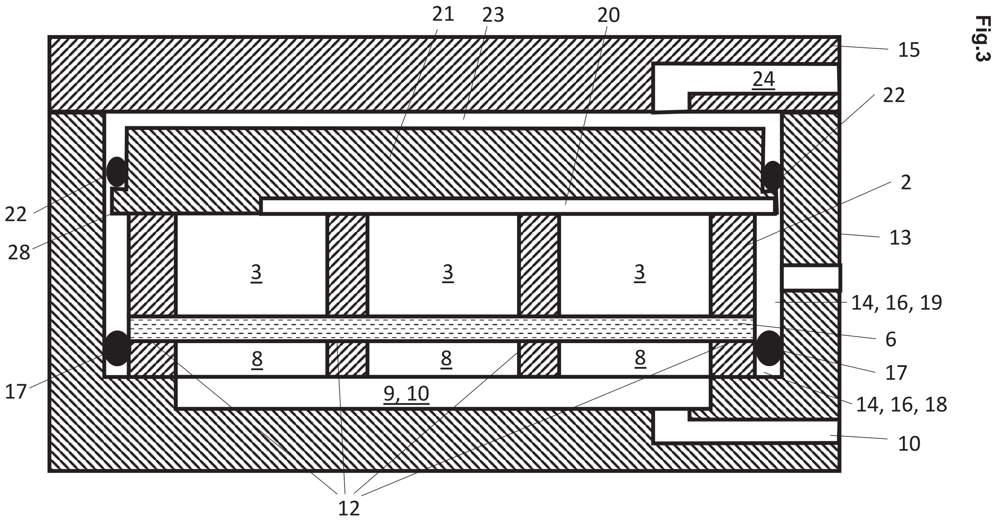

Zumindest die Formmaske ist beheizbar, optional wie in **Fig.1** dargestellt durch mindestens ein externes Heizelement ohne einem direkten Festkörperkontakt zur Formmaske **7** (z.B. Wärmestrahler oder konvektive Heizung oder konvektiv über die fluidische Verbindung zwischen der Druckquelle oder Drucksenke und allen Durchbrüchen der Formmaske) als Temperierungsvorrichtung **11.** Eine alternative bevorzugte Ausgestaltung sieht einen nicht näher dargestellten Festkörperkontakt zwischen Heizelementen und der Formmaske vor, vorzugsweise unmittelbar durch direkten Kontakt (z.B. über ein- oder angesetzte Heizelemente) oder mittelbar über zusätzliche Wärmebrücken und/oder über andere Komponenten der Vorrichtung wie z.B. eine Formkulisse (vgl. Pos. **13** in **Fig.2** **und** **3****).**

Besonders vorteilhaft ist eine Ausgestaltung der Vorrichtung derart, dass die laterale Erstreckung Durchbrüche in der Formmaske der der Durchtrittsöffnungen in der Trägerplatte entspricht. Die Durchtrittsöffnungen **3** in der Trägerplatte **2** und die Durchbrüche **8** der Formmaske **7** sind damit bevorzugt übereinander angeordnet und deckungsgleich. Um dies sicherzustellen, wird vorzugsweise vorgeschlagen, Führungsmittel zumindest der Trägerplatte und Formmaske zueinander vorzusehen.

**Fig.2** **und** **3** zeigen ein zweites und drittes Ausführungsbeispiel, bei dem eine Formkulisse **13** (mit integralem Verteilerblock) mit einer Aussparung **14** zum Einlegen der Formmaske **7,** der Folie **6** und der Trägerplatte **2** in der Reihenfolge wie auch in **Fig.1** übereinander vorgesehen ist. Die Formkulisse umfasst vorzugsweise die vorgenannten Führungsmittel. Wie dargestellt wird die Aussparung vorzugsweise durch einen Deckel **15** abgedeckt, wodurch die Aussparung **14** in der Formkulisse durch den Deckel zu einem abgeschlossenen Innenvolumen **16** verschlossen wird. Im Innenvolumen **16** wird dann wie dargestellt die Formmaske, die Folie und die Trägerplatte vollständig aufgenommen.

Zur Realisierung eines Druckunterschieds an der Folie wird vorgeschlagen, das um den Komponentenstapel aus Trägerplatte, Folie, Formmaske verbleibende Innenvolumen **16** mit einer umlaufenden Dichtung **17** vorzugsweise auf der Höhe der Formmaske **7** oder der Trägerplatte **2** zu versehen, die das Innenvolumen um das Verbundbauteil in ein erstes und zweites Teilvolumen **18 bzw. 19** unterteilt. Ein Druckunterschied zwischen erstem und zweiten Teilvolumen liegt dann auch unmittelbar an der Folie abseits der Auflage **12** und Auflagefläche **5** zwischen den Durchtrittsöffnungen **3** und den Durchbrüchen **8** an. Eine fluidische Verbindung **20** zwischen dem zweiten Teilvolumen **19** und allen Durchtrittsöffnungen **3** in der Trägerplatte **2** ist hierfür erforderlich. Das erste Teilvolumen **18** ist vorzugsweise über den Druckverteiler **9** und einen Anschluss **10** (in den Ausführungsbeispielen in der Formkulisse integriert) an eine erste Druckquelle, während hingegen das zweite Teilvolumen **19** an eine eigene zweite Druckquelle (z.B. wie dargestellt über einen seitlich aus der Formkulisse herausführenden Kanal) angeschlossen ist. Beide Druckquellen sind vorzugsweise außerhalb des Gehäuses angeordnet und in den Figuren nicht näher dargestellt.

**Fig.2** **und** **3** zeigen auch optionale Ausgestaltungen des hydraulischen oder pneumatischen Kolbenelements **21** zum flächigen Zusammenpressen von Trägerplatte, Folie und Formmaske (Komponentenstapel). Im Innenvolumen **16** wird das Kolbenelement über der Trägerplatte **2** angeordnet, vorzugsweise unmittelbar aufgesetzt und mittels einer umlaufenden fluiddichten Kolbendichtung **22** zur Innenwandung des Innenvolumens **16** im Bereich des zweiten Teilvolumens **19** am Deckel **15** oder in der Formkulisse **13** unter Ausbildung eines separaten Kolbenhubvolumens **23** hin versehen. Das Kolbenhubvolumen ist ein drittes Teilvolumen und als solches mit einem separaten Druckanschluss **24** vorzugsweise über den Deckel **15** für eine nicht weiter dargestellte Druckquelle angeschlossen.

Es wird optional vorgeschlagen, die Temperierungsmittel z.B. als Heizelemente in die Formkulisse **13** zu integrieren oder z.B. als Heizstrahler an die Formkulisse anzusetzen (alternativ gemäß **Fig.1** auch in oder an den Verteilerblock). Die Formkulisse (oder der Verteilerblock) weist einen direkten Festkörperkontakt und damit eine Wärmebrücke zur Formmaske **7** auf, womit diese aufheizbar ist. Alternativ lassen sich auch ein Temperierungsfluid über den Anschluss **10,** Druckverteiler **9** und Durchbrüche **8** direkt zur Formmaske **7** und der zu strukturierenden Folie **6** leiten.

**Fig.2** zeigt das zweite Ausführungsbeispiel mit einer auf dem Kolbenelement **21** aufgesetzte Kolbendichtung **22,** die radial nach außen hin durch eine umlaufende Stufe **28** auf dem Kolbenelement gestützt und in ihrer Ausdehnungsfreiheit begrenzt ist. Eine solche Ausgestaltung eignet sich insbesondere bei hohen über den Druckanschluss **24** eingebrachten Drücke auf das Kolbenelement. Da die Dichtigkeit zwischen Kolbenhubvolumen **23** und zweiten Teilvolumen **19** über den gesamten Kolbenhub durch die Kolbendichtung zu gewährleisten ist, eignet sich diese Ausgestaltung insbesondere für kleine Kolbenhübe, wobei die Kolbendichtung in vorteilhafter Weise mit Aufsetzen des Deckels **15** auf die Formkulisse **13** eingesetzt wird und dabei vorspannbar ist. Eine Vorspannung wiederum ermöglicht eine Fixierung und damit gleich auch die Führung des vorgenannten Komponentenstapels und des Kolbenelements mit dem Aufsetzen des Deckels auf die Formkulisse ohne ein Erfordernis weiterer Elemente.

**Fig.3** zeigt das dritte Ausführungsbeispiel mit einem um die umlaufende Mantelfläche des Kolbenelements **21** angeordnete umlaufende Kolbendichtung **22,** die dort durch eine umlaufende Stufe **28** in ihrer axialen Beweglichkeit nach unten hin begrenzt ist. Durch die Lage der Kolbendichtung an der Mantelfläche ist diese zwar grundsätzlich auch als Führung des vorgenannten Komponentenstapels und des Kolbenelements, allerdings ohne Vorspannung einsetzbar. Sie ermöglicht zudem auch größere Kolbenhübe.

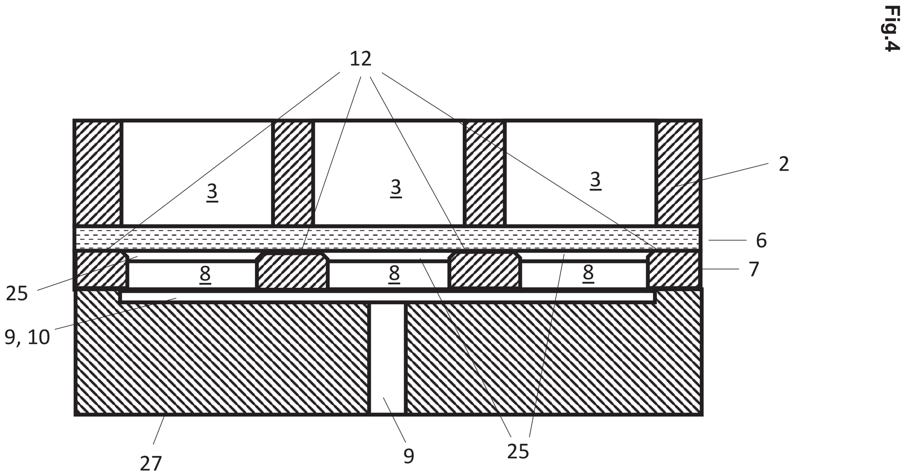

**Fig.4** zeigt eine Ausgestaltung des ersten Ausführungsbeispiels mit einer bevorzugten optionalen Ausgestaltung, wobei die Durchbrüche mit einer Fase **25** an der Auflage **12** zur Folie **7** hin versehen sind. Vorzugsweise sind dabei die Durchtrittsöffnungen **3** in der Trägerplatte **2** und die Durchbrüche **8** der Formmaske **7** übereinander angeordnet und deckungsgleich.

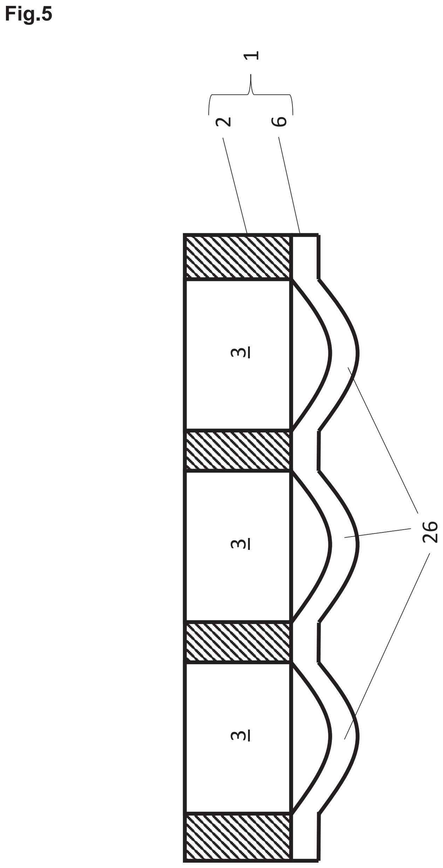

**Fig.5** zeigt eine schematische Schnittdarstellung durch einen Zellkulturträger als Verbundbauteil **1,** hergestellt nach vorgenanntem Herstellungsverfahren. Die Folie **6** ist dabei nicht nur an die Trägerplatte **2** angebunden, sondern unter den Durchtrittsöffnungen auch mit Mikrostrukturen **26** in der Form einer Auswölbung versehen.

Es wird vorgeschlagen, die vorgenannten Ausführungen, Ausgestaltung und Ausführungsbeispiele der Vorrichtung und des Verfahrens insbesondere für die Herstellung von Zellkulturcontainer zu verwenden. Die Trägerplatte **2** wird dabei vorzugsweise durch eine bodenlose Mikrotiterplatte mit einer Vielzahl gleichartiger und parallel zueinander angeordneten Durchtrittsöffnungen **3** und die Folie **6** mit einer Stärke zwischen 1, 2, 5 oder 10 µm und 20, 50, 100 oder 500 µm vorgeschlagen.

Als Verfahren zur Herstellung eines Verbundbauteils, wie beispielsweise eines Zellkulturträgers gemäß **Fig.5****,** werden zwei bevorzugte Verfahrensvarianten, vorzugsweise bei Verwendung einer vorgenannten Vorrichtung, vorgeschlagen und näher erläutert:
In der ersten Verfahrensvariante wird eine Formkulisse **13** mit einer Aussparung **14,** geeignet für ein Einlegen einer Mikrotiterplatte als Trägerplatte **2,** einer Folie **6,** einer Formmaske **7** (wie in **Fig.1** bis **4** beispielhaft dargestellt) sowie Mitteln zum flächigen Aneinanderpressen der Folie auf die Mikrotiterplatte und der Formmaske auf die Folie (z.B. das Kolbenelement **21** umfassend) bereitgestellt. Der Anpressdruck wird hydraulisch, alternativ auch pneumatisch oder auch alternativ mechanisch z.B. über eine Schraubvorrichtung durch ein Drehmomentwerkzeug genau eingestellt.

Das Kolbenelement **21** oder eine andere auf der Trägerplatte aufliegenden Andruckplatte als Teil der Anpressmittel verfügt über eine Kanalstruktur als fluidische Verbindung **20** zwischen dem zweiten Teilvolumen **19** und den Durchtrittsöffnungen **3** in der Trägerplatte **2,** um den Aufbau des Formdrucks über der Folie für dessen Mikrothermoformen im Bereich der Durchtrittsöffnungen zu ermöglichen. Ebenso sind im Verteilerblock **27** (vgl. **Fig.1** und **4****)** oder in der Formkulisse **13** (vgl. **Fig.2** und **3****)** ein Druckverteiler **9** mit Anschlüssen **10** zu den Durchbrüchen **8** in der Formmaske **7** vorgesehen, über die unter der Folie von unten ein Gegendruck oder ein Vakuum zum vorgenannten Formdruck aufbaubar ist.

In der zweiten, in den Figuren nicht explizit dargestellte Verfahrensvariante werden Mittel zum flächigen Aneinanderpressen der Folie auf die Mikrotiterplatte (Trägerplatte) und der Formmaske auf die Folie durch eine Klemmung der genannten Komponenten in der Aussparung zwischen der Formkulisse und dem Deckel realisiert. Der Anpressdruck wird in dieser Variante über Schrauben zum Anpressen des Deckels auf die Formkulisse über die Aussparung ermöglicht. Eine optionale über der Trägerplatte zusätzlich eingeklemmte elastische Ringdichtung besteht vorzugsweise aus einem flexiblen, hitzebeständigen Material, wie z.B. Viton, und überträgt den Anpressdruck der Platte über die Trägerplatte an die Folie. Wie auch in der ersten Verfahrensvariante ist sicherzustellen, dass beidseitig der Folie eine fluidische Verbindung und/oder ein anderer Druckverteiler mit Anschlüssen zu den Durchtrittsöffnungen der Trägerplatte und/oder zu den Durchbrüchen in der Formmaske vorzusehen, vorzugsweise für eine Aufprägung von individuell einstellbaren Drücken beidseitig der Folie.

Durch Anlegen einer Temperatur über der für das Material typischen Glasübergangstemperatur und eines erforderlichen Formdrucks und/oder des Gegendrucks lassen sich so die genannte Folie bei beiden Verfahrensvarianten in einem Schritt formen und zugleich mit der Trägerplatte stoffschlüssig verbinden (bonden).

Für die Fertigung von Mikrotiterplatten wird üblicherweise Polystyrol verwendet, dessen Glasübergangstemperatur bei ca. 100 bis 110°C liegt. Für das Bonden der Polystyrolfolie wird damit sowohl das Mikrotiterplatten- als auch das Folienmaterial über die Glasübergangstemperatur erweicht und so durch Verschweißung die vorgenannte stoffschlüssige Verbindung ermöglicht. Ein anschließender Kühlschritt auf unter 100°C verfestigt die Verbindung und stabilisiert die Folie in ihrer Form. Nach dem abschließenden Abkühlen auf ca. 50°C kann die Mikrotiterplatte mit gebondetem und (mikro)thermogeformten Boden aus der Formkulisse entnommen werden.

Die vorgeschlagene Lösung der Aufgabe vereinfacht den Herstellungsprozess von Polymerverbundteilen, von denen zumindest eines (Mikro)Strukturen enthält, signifikant. Separate Verfahrensschritte für eine Mikrostrukturierung und ein Bonden werden zusammengefasst, womit insbesondere der Aufwand einer Umrüstung mit einer Neujustierung von Trägerplatte und Folie entfällt. Ferner erfolgt sowohl die Strukturierung als auch das Bonden thermisch: Eine Verwendung von toxischen Klebstoffen und/oder Prozessparametern, die die Folien/Membranen schädigen könnten, sind nicht erforderlich.

### Bezugszeichenliste:

1 Verbundbauteil
2 Trägerplatte
3 Durchtrittsöffnung
4 Austritt
5 Auflagefläche
6 Folie
7 Formmaske
8 Durchbruch
9 Druckverteiler
10 Anschluss
11 Temperierungsvorrichtung
12 Auflage
13 Formkulisse
14 Aussparung
15 Deckel
16 Innenvolumen
17 Dichtung
18 Erstes Teilvolumen
19 Zweites Teilvolumen
20 Fluidische Verbindung
21 Kolbenelement
22 Kolbendichtung
23 Kolbenhubvolumen
24 Druckanschluss
25 Phase
26 Mikrostruktur
27 Verteilerblock
28 Stufe

## Patentansprüche

1. Verfahren zur Herstellung eines Verbundbauteils **(1)** umfassend folgende Schritte:
a) Bereitstellung einer Trägerplatte **(2)** mit mindestens einer Durchtrittsöffnung **(3)** jeweils mit beidseitigen Austritten **(4)** und einer Auflagefläche **(5)** um die Austritte auf einer Seite, sowie einer Folie **(6),** wobei die Trägerplatte und die Folie jeweils aus einem thermoplastischen Kunststoff bestehen, deren Temperaturintervalle des plastischen Bereichs sich überschneiden,
b) Bereitstellung einer Formmaske **(7)** mit Durchbrüchen **(8),** einer Druckquelle oder Drucksenke mit einem Druckverteiler **(9)** mit Anschlüssen **(10)** zu allen Durchbrüchen der Formmaske sowie einer Temperierungsvorrichtung **(11)** für zumindest die Formmaske,
c) Auflegen und flächiges Aneinanderpressen der Folie auf die Auflagefläche und der Formmaske auf die Folie, wobei die Durchbrüche der Formmaske über der mindestens einen Durchtrittsöffnung angeordnet sind,
d) Aufheizen zumindest der Formmaske **(7)** auf eine Temperatur, die in den Temperaturintervallen des plastischen Bereichs der Folie **(6)** und der Trägerplatte **(2)** liegt, wobei sich Folie und Trägerplatte dauerhaft miteinander zu dem Verbundbauteil **(1)** verbinden,
e) Anlegen eines Über- oder Unterdrucks an den Anschlüssen **(10)** der Formmaske **(7)** unter Beibehaltung der Temperatur, wobei die Folie lokal an den Durchbrüchen der Formmaske unter Ausbildung jeweils einer dreidimensionalen Mikrostruktur **(26)** plastisch in diese heraus- bzw. hineingezogen wird,
f) Abkühlen der Formmaske **(7)** und das damit verbundene Absenken der Temperatur von Folie **(6)** und Trägerplatte **(2)** unter die Glasübergangstemperaturen sowie
g) Trennen des Verbundbauteils **(1)** von der Formmaske **(7).**

2. Verfahren nach Anspruch 1, **dadurch gekennzeichnet, dass** die Trägerplatte **(2)** und die Folie **(6)** aus dem gleichen thermoplastischen Kunststoff bestehen oder aus Kunststoffen bestehen, deren Glasübergangstemperaturen in ihren Grenzen um maximal 5°C voneinander abweichen.

3. Verfahren nach Anspruch 1 oder 2, **dadurch gekennzeichnet, dass** der thermoplastische Kunststoff von Trägerplatte **(2)** und Folie **(6)** ein Polystyrol ist.

4. Verfahren nach einem der vorgenannten Ansprüche, **dadurch gekennzeichnet, dass** das Abkühlen gemäß Schritt f) im Bereich oberhalb und um die Glasübergangstemperaturen mit einer geringeren Abkühlungsrate als unterhalb den Glasübergangstemperaturen erfolgt.

5. Verfahren nach einem der vorgenannten Ansprüche, **dadurch gekennzeichnet, dass** die Folie **(6)** auf die Auflagefläche **(5)** der Trägerplatte **(2)** und der Formmaske **(7)** auf die Folie **(6)** durch hierfür vorgesehene mechanische, pneumatische oder hydraulische Mittel flächig aneinandergepresst werden.

6. Verfahren nach einem der vorgenannten Ansprüche, **dadurch gekennzeichnet, dass** eine Formkulisse **(13)** bereitgestellt wird, in die die Formmaske **(7),** die Folie **(6)** und die Trägerplatte **(2)** in der Reihenfolge übereinander eingelegt und zumindest die Trägerplatte, die Folie und die Formmaske zueinander ausgerichtet werden, wobei die Formkulisse **(13)** vorzugsweise den Druckverteiler **(9)** mit den Anschlüssen **(10)** zu allen Durchbrüchen **(8)** der Formmaske **(7)** umfasst.

7. Verfahren nach Anspruch 6, **dadurch gekennzeichnet, dass** die Formkulisse **(13)** Teil eines Gehäuses mit einem Innenvolumen **(16)** ist.

8. Verfahren nach Anspruch 7, **dadurch gekennzeichnet, dass** zwischen der Innenwandung des Innenvolumens **(16)** und der Formmaske **(7)** oder der Trägerplatte **(2)** eine erste umlaufende Dichtung **(17)** eingesetzt ist, wodurch das Innenvolumen in zwei Teilvolumina unterteilt wird, wobei ein erstes Teilvolumen **(18)** eine fluidische Verbindung mit dem Druckverteiler **(9)** und ein zweites Teilvolumen **(19)** eine fluidische Verbindung mit den abseits der Folie **(6)** angeordneten Austritten **(4)** der Durchtrittsöffnungen **(3)** in der Trägerplatte **(2)** aufweisen.

9. Vorrichtung zur Herstellung eines Verbundbauteils **(1)** aus einer Trägerplatte **(2)** mit Durchtrittsöffnungen **(3)** und einer die Durchtrittsöffnung einseitig abdeckenden Folie **(6)** mit einer Mikrostruktur **(26),** umfassend
a) eine Formmaske **(7)** mit Durchbrüchen **(8)** mit einer Auflage **(12)** für die Folie **(6),**
b) eine erste Druckquelle oder Drucksenke,
c) ein Druckverteiler **(9)** als fluidische Verbindung zwischen der Druckquelle oder Drucksenke und allen Durchbrüchen **(8)** der Formmaske **(7),**
d) einer Temperierungsvorrichtung **(11)** für zumindest die Formmaske **(7)** sowie
e) Mittel zum flächigen Aneinanderpressen der Folie **(6)** auf die Auflagefläche **(5)** und der Formmaske **(7)** auf die Folie **(6)** und die Folie auf die Trägerplatte **(2).**

10. Vorrichtung nach Anspruch 9, umfassend Führungsmittel zumindest der Trägerplatte und Formmaske zueinander.

11. Vorrichtung nach Anspruch 9 oder 10, umfassend eine Formkulisse **(13)** mit einer Aussparung **(14)** zum Einlegen der Formmaske **(7),** der Folie **(6)** und der Trägerplatte **(2)** in der Reihenfolge übereinander.

12. Vorrichtung nach Anspruch 11, umfassend einen Deckel **(15)** für die Formkulisse **(13),** wobei Formkulisse und Deckel ein Innenvolumen **(16)** zur Aufnahme von Formmaske, Folie und Trägerplatte bilden.

13. Vorrichtung nach Anspruch 12, umfassend
f) eine umlaufende Dichtung **(17)** im Innenvolumen **(16)** auf der Höhe der Formmaske **(7)** oder der Trägerplatte **(2),** der das Innenvolumen um das Verbundbauteil in ein erstes und zweites Teilvolumen **(18** bzw. **19)** unterteilt,
g) eine fluidische Verbindung **(20)** zwischen dem zweiten Teilvolumen **(19)** und allen Durchtrittsöffnungen **(3)** in der Trägerplatte **(2)** sowie
h) einem Anschluss des zweiten Teilvolumens **(19)** an eine zweite Druckquelle oder Drucksenke.

14. Vorrichtung nach Anspruch 12 oder 13, **dadurch gekennzeichnet, dass** die Mittel zum flächigen Aneinanderpressen ein hydraulisches oder pneumatisches Kolbenelement **(21)** umfasst, das im Innenvolumen **(16)** über der Trägerplatte **(2)** angeordnet mittels einer umlaufenden fluiddichten Kolbendichtung **(22)** zur Innenwandung des Innenvolumens **(16)** am Deckel **(15)** oder in der Formkulisse **(13)** hin ein Kolbenhubvolumen **(23)** als drittes Teilvolumen mit einem Druckanschluss **(24)** für eine Druckquelle einschließt.

15. Vorrichtung nach einem der Ansprüche 9 bis 14, **dadurch gekennzeichnet, dass** die Durchtrittsöffnungen **(3)** in der Trägerplatte **(2)** und die Durchbrüche **(8)** der Formmaske **(7)** übereinander angeordnet und deckungsgleich sind, wobei die Durchbrüche mit einer Fase **(25)** an der Auflage **(12)** zur Folie **(7)** hin versehen sind.

16. Vorrichtung nach einem der Ansprüche 9 bis 14, **dadurch gekennzeichnet, dass** die Trägerplatte **(2)** durch eine bodenlose Mikrotiterplatte mit einer Vielzahl gleichartiger und parallel zueinander angeordneten Durchtrittsöffnungen **(3)** ist und die Folie **(6)** eine Stärke von 5 bis 500 pm aufweist.
